Europäisches Patentamt

European Patent Office

Office européen des brevets

(19)

(11) EP 0 709 475 A1

## (12) EUROPEAN PATENT APPLICATION

(43) Date of publication:
01.05.1996 Bulletin 1996/18

(51) Int Cl.$^6$: **C22B 43/00**

(21) Application number: 95500125.0

(22) Date of filing: 15.09.1995

(84) Designated Contracting States:
**AT BE CH DE DK FR GB GR IE IT LI LU NL PT SE**

(30) Priority: 26.10.1994 ES 9402221

(71) Applicant: **ASTURIANA DE ZINC, S.A.**
**E-33417 Asturias (ES)**

(72) Inventors:
• **Sitges Menendez, Fernando**
  **E-33400 Salinas-Castrillon (Asturias) (ES)**
• **Alvarez Tamargo, Francisco**
  **E-33440 Luanco (Asturias) (ES)**
• **Tamargo Garcia, Francisco**
  **E-33400 Salinas-Castrillon (Asturias) (ES)**
• **Rodriguez Valcarcel, Matias**
  **Piedras Blancas-Castrillon (Asturias) (ES)**

• **Muruzabal Sitges, Covadonga**
  **E-33400 Salinas-Castrillon (Asturias) (ES)**

(74) Representative:
**Gomez-Acebo y Pombo, José Miguel**
**c/o CLARKE, MODET & Co.,**
**Avda. de los Encuartes, No. 21**
**E-28760 Tres Cantos (Madrid) (ES)**

Remarks:
A request for correction of the specification has been filed pursuant to Rule 88 EPC. A decision on the request will be taken during the proceedings before the Examining Division (Guidelines for Examination in the EPO, A-V, 3.).

(54) **Procedure to obtain mercury metal from products containing mercuric chloride**

(57) Procedure to obtain metal mercury from products containing mercuric chloride. It involves treating said products with an aqueous solution, slightly acid and chloride hot, in the presence of a metal capable of reducing the $Hg^{2+}$ to $Hg^0$ and of forming an amalgam, so as to recover that way the mercury in metal form.

**Description**

This invention is related to a procedure for the treatment of mercuric chloride or products containing it so as to obtain mercury metal.

Solid products called "soots" and containing elemental mercury and other mercury compounds in emulsion form, which difficult its separation and use, are generated during the humid refining of the roasting gases of sulphured minerals containing mercury.

The composition of these "soots" and their mercury content is very variable, although elemental mercury and compounds containing sulphur (mercuric sulphur) and chlorine (mercuric chloride) do generally prevail. The latter compound is particularly noxious for mercury recovery, given that it cover the metal surface, preventing the joining of the drops.

Spanish patent 9000643 describes a procedure for the treatment of soots through washing with ammonia or sodium hydroxide. This treatment may not nevertheless be used for the treatment of soots containing mercuric chloride, as already stated in the specification of said patent.

Is equally known the electrolytic obtention of metal mercury from soots containing mercuric chloride. This invention deviates from this state of the art given that the methodology implied in this invention has nothing at all in common with the electrolytic method.

A procedure to treat soots containing elemental mercury and mercuric chloride for the obtention of metal mercury, yielding excellent results, has now been found.

Specifically, this invention provides a procedure for the obtention of metal mercury from products containing mercuric chloride, and involving the treatment of products containing mercuric chloride with a slightly acid solution containing a high concentration of hot chloride ions in the presence of a metal capable of reducing the $HG^{2+}$ and $HG^{0}$ and form an amalgam, so as to enable the recovery of all the mercury contained within the mercuric chloride.

In accordance with the invention, the decomposition of the mercuric chloride takes place through its treatment with a slightly acid, concentrated and chloride hot solution as per the reaction:

$$Hg_2Cl_2 + 2Cl^- \rightarrow Hg^0 + [Cl_4Hg]^{2-} \qquad [1]$$

This reaction is slow but, if there is a metal capable of reducing the $Hg^{2+}$ to $Hg^{0}$ such as, for example, zinc, then takes place the reaction:

$$[Cl_4Hg]^{2-} + Zn^0 \rightarrow Hg^0 + Cl_2Zn + 2Cl^- \qquad [2]$$

which displaces the reaction [1] to the right and allows the full transformation of the $Hg_2Cl_2$ to $Hg^0$.

Should there be excess zinc metal, the elemental mercury forms an amalgam with the zinc that favors the union of the mercury drops and facilitates its recovery.

Thus, the treatment of the invention is very adequate for the treatment of "soots" that contain mercury metal and mercuric chloride that form an emulsion that is hard to treat using the state of the art procedures known up to now.

Using the procedure herein described and claimed it is possible to recover the mercury from the mercuric chloride and the amalgam formed wets the metallic mercury drops present in the "soots" in emulsion form, integrating them in said amalgam. Thus the metallic mercury from the emulsion and the mercury that was in the shape of mercuric chloride are recovered.

The mercury obtained by this procedure may be purified through treatment with an acid solution containing chloride ions.

Any water soluble chloride may be used to support the Cl⁻ ions but, due to financial reasons, the most adequate are sodium chloride and ammonia chloride, both for the decomposition of the mercuric chloride and for the purification of the mercury recovered.

The procedure of this invention shall now be described using the example below, which must be considered as simply illustrative and as in no way limiting the scope of the invention, as duly set out in the attached claims.

Example

100 g of $Hg_2Cl_2$ were treated with 1 liter of 100 g/l $NH_4Cl$ solution to which sufficient $H_2SO_4$ was then added to reach pH 4. 30 g of granulated zinc were then added and it was kept at a temperature of 90° C over 7 hours with agitation. An amalgam weighing 96 g and containing 84.9 g of mercury formed.

**Claims**

1. Procedure to obtain mercury metal from products containing mercuric chloride, characterized because it involves treating said products with an aqueous, slightly acid and chloride hot solution, in the presence of a metal capable of reducing the $Hg^{2+}$ to $Hg^{0}$ and of forming an amalgam, so as to recover that way the mercury in metal form.

2. Procedure as per claim 1, characterized because the chloride concentration is set between 1 molar and the saturation point, preferably 2 molar.

3. Procedure as per claims 1 and 2, characterized because the salts used to contribute the Cl⁻ ions are water soluble salts, preferably sodium chloride and ammonia chloride.

4. Procedure as per claim 1, characterized because the temperature of the operation must be between 80 and 100° C.

5. Procedure as per claims 1, 2, 3 and 4, characterized because the mercury obtained may be purified through washing in a 1 molar $Cl^-$ ion solution at a pH of between 1 and 1.5.

European Patent Office

# EUROPEAN SEARCH REPORT

Application Number

EP 95 50 0125

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 232 488 (A. GONZALES-POSADA SANCHEZ ET AL.) * claims 5-11 * | 1 | C22B43/00 |
| D | & ES-A-9 000 643 | | |
| | --- | | |
| A | DE-C-319 476 (CONSORTIUM FÜR ELEKTROCHEMISCHE INDUSTRIE) * claim 1 * | 1 | |
| | --- | | |
| A | US-A-3 039 865 (J. F. GILBERT ET AL.) * claim 1 * | 1 | |
| | --- | | |
| A | EP-A-0 452 178 (VIELLE MONTAGNE FRANCE S.A. "LES MERCURIALES") * claim 1 * | 1 | |
| | --- | | |
| A | DATABASE WPI Section Ch, Week 7552 Derwent Publications Ltd., London, GB; Class E37, AN 75-85573W & JP-A-50 117 604 (AGENCY OF IND SCI TECH) , 13 September 1975 * abstract * | 1 | |
| | ----- | | TECHNICAL FIELDS SEARCHED (Int.Cl.6) C22B |

The present search report has been drawn up for all claims

| Place of search | Date of completion of the search | Examiner |
|---|---|---|
| BERLIN | 30 January 1996 | Sutor, W |